# EUROPEAN PATENT SPECIFICATION

(11) **EP 0 669 215 B1**
(45) Date of publication and mention of the grant of the patent: **28.01.1998**
(21) Application number: 94200494.6
(22) Date of filing: 25.02.1994
(51) Int. Cl.: B44C 1/17, C04B 41/45, B41M 1/34

(54) **Decalcomania for on-glaze decoration of ceramic ware**
Abziehbild zur Aufglasur-Dekoration von keramischen Gegenständen
Décalcomanie pour la décoration de céramique émaillée

(43) Date of publication of application: 30.08.1995
(73) Proprietor: KYOTO CERAMIC ART KYODOKUMIAI, Kyoto 604 (JP)
(72) Inventor: Kodama, Yukio, Kyoto 604 (JP)
(74) Representative: Brooks, Nigel Samuel

(56) References cited:
- GB-A- 2 092 522
- GB-A- 2 262 913
- US-A- 2 359 462
- US-A- 4 126 728

## Description

### BACKGROUND OF THE INVENTION

### 1. Field of the Invention:

The present invention relates to a decalcomania for three-dimensional on-glaze decoration of ceramic ware such as whiteware, porcelain enamel, cloisonné, and glass.

### 2. Description of the Prior Art:

Decalcomania for on-glaze decoration is usually composed of mounting paper, water-soluble adhesive coated thereon, decorating material laminated thereon, and plastic coating. To perform on-glaze decoration, it is stuck on the surface of ceramic ware, with the mounting paper peeled off, followed by drying and firing.

If the decalcomania mentioned above is to be used for thick three-dimensional decoration on ceramic ware, it would be necessary to increase the thickness of the decorating material formed on the adhesive. However, the result is not as satisfactory as intended because of several problems. A thick decorating material does not readily dry in the production of decalcomania. It is difficult to accurately print a pattern of thick decorating material on the mounting paper. Thick build-up of decoration needs a large amount of expensive materials which flows during firing, resulting in a deformed pattern. There is a difference between the coefficients of thermal expansion of the decorating material and the body or glaze of ceramic ware, which causes cracking or peeling of the decorating material after firing.

### SUMMARY OF THE INVENTION

It is an object of the present invention to provide a decalcomania for on-glaze decoration of ceramic ware, having at least some of the following advantages: It permits its decorating material to readily dry despite its thick build-up. It permits the effective use of the decorating material. It prevents the decorating material from flowing at the time of firing and also prevents the decorating material from cracking or peeling after firing. It affords a detailed three-dimensional pattern on ceramic ware.

The present invention is embodied in a decalcomania for on-glaze decoration of ceramic ware which is composed of mounting paper, adhesive coated on the mounting paper, decorating material laminated on the adhesive, and plastic coating to hold the decorating material and which is used for decoration by sticking, with its mounting paper peeled off, to the surface of ceramic ware, followed by drying and firing, characterized in that the decorating material is composed of a plurality of layers, with the upper layer being formed on the previously dried lower layer, such that it yields a layer with a total thickness of 300-2000 µm after firing, the decorating material in the lowest layer has a coefficient of thermal expansion which is close to that of the surface of ceramic ware and is also close to that of the decorating material in the adjacent layers, and the plastic coating is disposed between the uppermost layer of decorating material and the lowermost layer of decorating material.

The adhesive in the decalcomania can be a water-soluble paste or a fusible substance such as paraffin.

### DETAILED DESCRIPTION OF THE INVENTION

The decalcomania of the present invention is constructed as follows: The decorating material is composed of a plurality of layers, preferably three or more layers, so that it is made thick. Each layer is formed after its lower layer has been formed and dried. As many layers as necessary are laminated in consideration of shrinkage due to drying and firing so that they yield a decorating layer which is 300-2000 µm thick after firing. Too thin a decorating material does not produce the effect of three-dimensional decoration. Too thick a decorating material presents difficulties in the manufacturing and firing processes and yields poor three-dimensional decoration.

A preferred feature of the invention is that a desired pattern is formed only in the uppermost layer of decorating material. The other layers of decorating material are intended for volume increase and adjustment of the coefficient of thermal expansion. This eliminates the necessity of forming a desired pattern with a thick decorating material and of using a decorating material for the upper layer which has a coefficient of thermal expansion close to that of the surface of ceramic ware.

After firing, the decorating material of the lower-most layer shrinks as the surface of ceramic ware shrinks and the decorating material of the other layers also shrinks as the decorating material of the adjacent layers shrinks. Therefore, it is necessary that the decorating materials of the adjacent layers have a similar coefficient of thermal expansion. This is achieved if the individual layers are arranged such that their coefficient of thermal expansion gradually increases or decreases in going from the lower layers to the upper layers or remains the same throughout all the layers. In addition, it is possible to make the lower layer thinner than the upper layer or to form the pattern such that the area of the decorating material (for each unit of pattern) gradually decreases in going from the lower layer to the upper layer. These provisions yield a three-dimensional decoration with a better appearance.

The plastic coating disappears upon firing. It is necessary to hold the decorating material in place. It may be applied by brushing, spraying, or squeezing. According to the conventional technology, the plastic coating functions as a top coat (the uppermost layer) of the decalcomania for on-glaze decoration. This is not true of the present invention, in which the decorating material is made thick from a plurality of layers. In such a case, it is difficult to apply a plastic thin onto the entire layers. If a plastic is applied thick onto the entire layers to avoid incomplete covering, the result would be the flowing of the decorating material. According to the present invention, the plastic coating is disposed between the uppermost and lowermost layers of decorating material, preferably on the lowermost layer of decorating material. This permits the plastic coating to be formed thin between layers in the course of laminating the decorating material before the layers reach the maximum thickness. Incidentally, the decorating material of the uppermost layer may contain a coloring agent (such as pigment), and in such a case it is possible to obtain a three-dimensional decoration which is colored as desired. In addition, the decorating materials and plastic coating may be formed continuously by printing using a form, so that the decalcomania for on-glaze decoration can be produced efficiently using a simple apparatus.

It is understood from the foregoing that the decalcomania for on-glaze decoration according to the present invention offers at least some of the following advantages: that the plastic coating can be formed easily, the thick layers as a whole can be dried with certainty, the decorating material hardly flows at the time of firing, the expensive decorating material can be effectively utilised, the decorating material hardly cracks or peels off after firing, and the decalcomania gives rise to an accurate three-dimensional decoration on the surface of ceramic ware.

### BRIEF DESCRIPTION OF THE DRAWINGS

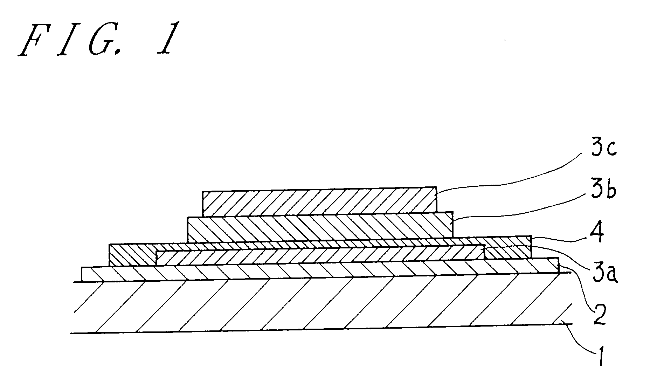

Fig. 1 is a sectional view of the decalcomania for on-glaze decoration pertaining to the present invention.

The invention will be described with reference to the following examples.

### Example 1

A decalcomania as shown in Fig. 1 was prepared. It is composed of a mounting paper (1), a water-soluble paste (2), a first decorating material (3a), a plastic coating (4), a second decorating material (3b), and a third decorating material (3c), which are formed in layers on top of the other. The third decorating layer (3c) may contain a colouring agent in its surface to give a coloured pattern.

The first decorating material was prepared by thorough mixing from 80 g of white frit (made by Yoshimura Ceramic Chemical) containing 65% lead oxide (PbO) and 20 cc of screen oil (made by Degussa in Germany) composed of 60% soluble acrylic resin and 40% diluent (50:50 mixture of xylene and terpene). It was applied to the paste-coated mounting paper (made by Isekyu in Japan) by printing with a 200-µm thick hand-cut stencil, followed by drying. The layer of the first decorating material was coated with the same resin as used in the above-mentioned screen oil by printing with a photographically prepared screen (1200-mesh, 100-µm thick fabric), in such a manner that the coating layer extends beyond the edge of the underlying layer.

The second decorating material was prepared by thorough mixing from 78.4 g of white frit, 0.8 g of silica powder, 0.8 g of kaolin, and 20 cc of screen oil. (Silica powder and kaolin are intended to increase the coefficient of thermal expansion.) It was applied to the plastic coating by printing with a 350-µm thick hand-cut stencil.

The third decorating material was prepared by thorough mixing from 77.6 g of white frit, 1.6 g of silica powder, 0.8 g of kaolin, and 20 cc of screen oil. It was applied to the layer of the second decorating material by printing with a 350-µm thick hand-cut stencil.

The thus obtained decalcomania was dipped in water for 30-60 seconds to peel off the mounting paper and then stuck to the surface of a black solid-color tile, 10 cm square (made by Inax). After drying, the tile was fired in a furnace at 730-780°C. There was obtained a 600-µm thick, accurate white three-dimensional pattern. Flowing did not occur during firing, and cracking and peeling were not noticed after firing. The quality of decoration was comparable to that achieved with a sample in which the plastic coating is formed on the layer of the third decorating material.

### Example 2

Each of the first to fourth decorating materials was prepared from frit and screen oil in the same manner as in Example 1, said frit being composed mainly of 42% silica (SiO₂), 4.6% alumina (Al₂O₃), 13% boron oxide (B₂O₃), and 25.5% lead oxide (PbO). They were applied consecutively to the mounting paper in the same manner as in Example 1 by printing with a 300-µm thick hand-cut stencil. The plastic coating was formed by printing on the layer of the first decorating material.

The thus obtained decalcomania was dipped in water to peel off the mounting paper and then stuck to the surface of a black solid-color tile, 10 cm square (made by Inax) in the same manner as in Example 1. After drying, the tile was fired in an electric furnace by heating up to 750°C over 5 hours and keeping at 750°C for 10 minutes, followed by slow cooling. There was obtained an 800-µm thick, accurate white three-dimensional pattern. Flowing did not occur during firing, and cracking and peeling were not noticed after firing.

### Example 3

The first decorating material was prepared by mixing screen oil with 95 g of frit and 5 g of titanium oxide in the same manner as in Example 1. The frit is composed mainly of 13% sodium oxide (Na₂O), 6.4% alumina (Al₂O₃), 66% silica (SiO₂), 4.5% potassium oxide (K₂O), 8.9% zinc oxide (ZnO), and a small amount of boron oxide (B₂O₃). The titanium oxide functions to impart a white color. The first decorating material was applied to the mounting paper in the same manner as in Example 1 by printing with a 200-µm thick hand-cut stencil. The layer of the first decorating material was covered with the plastic coating by printing.

The second decorating material was prepared (in the same manner as above) by mixing screen oil with 80 g of frit (as specified above), 5 g of titanium oxide, and 15 g of Amakusa porcelain stone (to increase the coefficient of thermal expansion). It was applied to the plastic coating by printing using a hand-cut stencil in the same manner as above.

The third and fourth decorating materials were prepared according to the same formulation as the second one. They were applied consecutively by printing with a 400-µm thick hand-cut stencil, such that the area of the layer of the third decorating material is smaller than that of the second decorating material and the area of the layer of the fourth decorating material is smaller than that of the third decorating material.

The resulting decalcomania was tested in the same manner as in Example 2. There was obtained an 800-µm thick, accurate white three-dimensional pattern. Flowing did not occur during firing, and cracking and peeling were not noticed after firing.

### Example 4

The first to third decorating materials were prepared according to the formulation of the second decorating material in Example 3. The first decorating material was applied to the mounting paper by printing with a 200-µm thick hand-cut stencil. The layer of the first decorating material was covered with the plastic coating. The second and third decorating materials were applied consecutively by printing with a 400-µm thick hand-cut stencil, such that the area of the layer of the second decorating material is smaller than that of the first decorating material and the area of the layer of the third decorating material is smaller than that of the second decorating material.

The fourth decorating material was prepared according to the formulation of the first decorating material in Example 3. It was applied by printing with a 200-µm thick hand-cut stencil.

The resulting decalcomania was tested in the same manner as in Example 2. There was obtained an 800-µm thick, accurate white three-dimensional pattern. Flowing did not occur during firing, and cracking and peeling were not noticed after firing.

## Claims

1. A decalcomania for on-glaze decoration of ceramic ware which is composed of mounting paper (1), adhesive (2) coated on the mounting paper (1), decorating material (3a,3b,3c) laminated on the adhesive (2), and plastic coating (4) to hold the decorating material (3) characterised in that the decorating material is composed of a plurality of layers (3a,3b,3c), with the upper layer (3c) being formed on the previously dried lower layer (3a), such that it yields a layer with a total thickness of 300-2000 µm after firing, the decorating material in the lowest layer (3a) has a coefficient of thermal expansion which is close to that of ceramic ware and is also close to that of the decorating material in the adjacent layers (3b,3c), and the plastics coating (4) is disposed between the uppermost layer (3c) of decorating material and the lowermost layer (3a) of decorating material.

2. A decalcomania for on-glaze decoration of ceramic ware as claimed in claim 1, wherein the decorating material is formed in three or more layers (3a,3b,3c).

3. A decalcomania for on-glaze decoration of ceramic ware as claimed in claim 1 or claim 2, wherein the layers (3a,3b,3c) of the decorating material are arranged such that their coefficient of thermal expansion increases or decreases gradually in going from the lower layer to the upper layer.

4. A decalcomania for on-glaze decoration of ceramic ware as claimed in claim 1 or claim 2, wherein the layers (3a,3b,3c) of the decorating material have the same coefficient of thermal expansion.

5. A decalcomania for on-glaze decoration of ceramic ware as claimed in any preceding claim, wherein the uppermost layer (3c) of the decorating material has a colouring agent in its surface.

6. A decalcomania for on-glaze decoration of ceramic ware as claimed in any preceding claim, wherein the plastic coating (4) is disposed on the lowest layer (3a) of the decorating material.

7. A decalcomania for on-glaze decoration of ceramic ware as claimed in any preceding claim, wherein the area of the layer (3a,3b,3c) of the decorating material (for each unit of pattern) gradually decreases in going from the lower layer (3a) to the upper layer (3c).

8. A decalcomania for on-glaze decoration of ceramic ware as claimed in any preceding claim, wherein a desired pattern is formed only in the uppermost layer (3c) of the decorating material.

## Patentansprüche

1. Abziehbild zur Aufglasur-Dekoration von keramischen Gegenständen, bestehend aus Trägerpapier (1), auf das Trägerpapier (1) aufgetragenen Klebstoff (2), auf den Klebstoff (2) laminiertes Dekorationsmaterial (3a,3b,3c) und eine Plastikbeschichtung (4), um das Dekorationsmaterial (3) zu halten, **dadurch gekennzeichnet**, daß das Dekorationsmaterial aus mehreren Lagen (3a,3b,3c) besteht, wobei die obere Lage (3c) auf der zuvor getrockneten unteren Lage (3a) derart ausgebildet ist, daß sich eine Lage mit einer Gesamtdicke von 300 bis 2000 um nach dem Brennen ergibt, das Dekorationsmaterial in der untersten Lage (3a) einen Wärmeausdehnungskoeffizienten hat, der nahe dem des keramischen Gegenstandes und auch nahe dem des Dekorationsmaterials in den benachbarten Lagen (3b,3c) ist, und die Plastikbeschichtung (4) zwischen der obersten Lage (3c) des Dekorationsmaterials und der untersten Lage (3a) des Dekorationsmaterials angeordnet ist.

2. Abziehbild zur Aufglasur-Dekoration von keramischen Gegenständen nach Anspruch 1, bei dem das Dekorationsmaterial in drei oder mehr Lagen (3a,3b,3c) ausgebildet ist.

3. Abziehbild zur Aufglasur-Dekoration von keramischen Gegenständen nach Anspruch 1 oder 2, bei dem die Lagen (3a,3b,3c) des Dekorationsmaterials derart angeordnet sind, daß ihr Wärmeausdehnungskoeffizient stufenweise von der untersten Lage zur obersten Lage zunimmt oder abnimmt.

4. Abziehbild zur Aufglasur-Dekoration von keramischen Gegenständen nach Anspruch 1 oder 2, bei dem die Lagen (3a,3b,3c) des Dekorationsmaterials gleiche Wärmeausdehnungskoeffizienten aufweisen.

5. Abziehbild zur Aufglasur-Dekoration von keramischen Gegenständen nach einem der vorhergehenden Ansprüche, bei dem die oberste Lage (3c) des Dekorationsmaterials einen Farbstoff in seiner Oberfläche aufweist.

6. Abziehbild zur Aufglasur-Dekoration von keramischen Gegenständen nach einem der vorhergehenden Ansprüche, bei dem die Plastikbeschichtung (4) auf der untersten Lage (3a) des Dekorationsmaterials angeordnet ist.

7. Abziehbild zur Aufglasur-Dekoration von keramischen Gegenständen nach einem der vorhergehenden Ansprüche, bei dem die Fläche der Lage (3a,3b,3c) des Dekorationsmaterials (für jede Mustereinheit) stufenweise von der tieferen Lage (3a) zur oberen Lage (3c) zunimmt.

8. Abziehbild zur Aufglasur-Dekoration von keramischen Gegenständen nach einem der vorhergehenden Ansprüche, bei dem ein gewünschtes Muster nur in der obersten Lage (3c) des Dekorationsmaterials ausgebildet ist.

## Revendications

1. Décalcomanie pour décoration sur couverte d'articles céramiques, qui est composée d'un papier de montage (1), d'un adhésif (2) appliqué en revêtement sur le papier de montage (1), d'un matériau décoratif (3a, 3b, 3c) appliqué de manière superposée sur l'adhésif (2) et d'un revêtement de matière plastique (4) servant à maintenir le matériau décoratif (3), caractérisé en ce que le matériau décoratif est composé de plusieurs couches (3a, 3b, 3c), la couche supérieure (3c) étant formée sur la couche inférieure (3a) précédemment séchée, de façon à former une couche d'une épaisseur totale de 300 - 2000 µm après cuisson, en ce que le matériau décoratif situé dans la couche inférieure (3a) possède un coefficient de dilatation thermique qui est voisin de celui de l'article céramique et est aussi voisin de celui du matériau décoratif situé dans les couches adjacentes (3b, 3c) et en ce que le revêtement de matière plastique (4) est disposé entre la couche supérieure (3c) du matériau décoratif et la couche inférieure (3a) du matériau décoratif.

2. Décalcomanie pour décoration sur couverte d'articles céramiques telle que revendiquée à la revendication 1, dans laquelle le matériau décoratif est formé en trois couches ou davantage (3a, 3b, 3c).

3. Décalcomanie pour décoration sur couverte d'articles céramiques telle que revendiquée à la revendication 1 ou la revendication 2, dans laquelle les couches (3a, 3b, 3c) du matériau décoratif sont agencées de façon que leur coefficient de dilatation thermique augmente ou diminue progressivement en allant de la couche inférieure à la couche supérieure.

4. Décalcomanie pour décoration sur couverte d'articles céramiques telle que revendiquée à la revendication 1 ou la revendication 2, dans laquelle les couches (3a, 3b, 3c) du matériau décoratif possèdent le même coefficient de dilatation thermique.

5. Décalcomanie pour décoration sur couverte d'articles céramiques telle que revendiquée à l'une quelconque des revendications précédentes, dans laquelle la couche supérieure (3c) du matériau décoratif présente un agent colorant à sa surface.

6. Décalcomanie pour décoration sur couverte d'articles céramiques telle que revendiquée à l'une quelconque des revendications précédentes, dans laquelle le revêtement de matière plastique (4) est disposé sur la couche inférieure (3a) du matériau décoratif.

7. Décalcomanie pour décoration sur couverte telle que revendiquée à l'une quelconque des revendications précédentes, dans laquelle l'aire de la couche (3a, 3b, 3c) du matériau décoratif (pour chaque unité de motif) diminue progressivement en allant de la couche inférieure (3a) à la couche supérieure (3c).

8. Décalcomanie pour décoration sur couverte d'articles céramiques telle que revendiquée à l'une quelconque des revendications précédentes, dans laquelle un motif voulu n'est formé que dans la couche supérieure (3c) du matériau décoratif.
